# EUROPEAN PATENT SPECIFICATION

(11) **EP 3 758 478 B1**
(45) Date of publication and mention of the grant of the patent: **16.10.2024**
(21) Application number: 19760727.8
(22) Date of filing: 28.02.2019
(51) Int. Cl.: A01K 73/045, A01K 73/04

(54) **TRAWL DOOR**
SCHERBRETT
PORTE DE CHALUT

(30) Priority: 02.03.2018 NO 20180314
(43) Date of publication of application: 06.01.2021
(73) Proprietor: Mørenot Fishery AS, 6280 Søvik (NO)
(72) Inventor: VINTHER, Bergur, Sumba, 970 (FO)
(74) Representative: Håmsø Patentbyrå AS
(86) International application number: PCT/NO2019/050044
(87) International publication number: WO 2019/168408

(56) References cited:
- WO-A1-2010/019049
- WO-A1-2013/014507
- WO-A1-2015/055207
- WO-A1-2015/055207
- WO-A1-2017/084670
- WO-A1-86/02525
- AU-B2- 465 392
- GB-A- 1 405 076
- US-A- 4 879 830
- US-A- 5 283 972

## Description

This invention relates to a trawl door with an adjustable hydrodynamic surface. More particularly this invention relates to a trawl door with a total height that is greater than the total length of the trawl door. The trawl door is provided with a regulation means comprising at least one through opening or at least one cut out in a leading plate and a displaceable hatch. The regulation means is positioned on a towing face of the leading plate.

Patent document WO 2010/019049 discloses a trawl door with a total height which is greater than the total width of the trawl door. The trawl door is provided with a remotely controlled damper that is displaceable in the height direction of the trawl door. The damper covers completely or partially an opening in a middle panel. The active surface area is adjusted by the position of the damper.

Patent document WO 2013/014507 discloses a trawl door with a total height which is greater than the total width of the trawl door. The trawl door is provided with remotely controlled adjustable panels. The panels are pivotable about an axis extending in the height direction of the trawl door. The water flow through the trawl door, and thereby the towing resistance, is adjusted by the position of the pivotable panels.

Patent document WO 2015/055207 discloses a trawl door with a total height which is greater than the total width of the trawl door. The trawl door is provided with remotely controlled movable plate elements at the aft edge of the trawl door. The movable plate elements are displaceable in a direction between the front edge / leading edge and the aft end / trailing edge. The movable plate elements are displaceable along a surface of the body plate which forms the distal plate of the trawl door. The hydrodynamic area of the body plate, and thus the hydrodynamic area of the trawl door is adjusted by the position of the movable plates.

Patent document WO 2017/084670 discloses a trawl door with a total height which is greater than the total width of the trawl door. The trawl door is provided with flaps as adjustable means. The flaps are positioned below the door's distal panels. The distal panel is formed as an airfoil with an interior chamber, i.e. the distal panel is hollow. The flaps are remotely controlled. In the active position the flaps extend the surface of the distal flap towards the rear of the trawl door.

The invention has for its object to remedy or to reduce at least one of the drawbacks of the prior art, or at least provide a useful alternative to prior art.

The object is achieved through features, which are specified in the description below and in the claims that follow.

The invention is defined by the independent patent claim. The dependent claims define advantageous embodiments of the invention.

The invention relates more particularly to a trawl door forming a height and a length, the trawl door comprising several curved and overlapping plates including a leading plate. The curved and overlapping plates extend in the height direction. The trawl door forms a towing face which comprises a towing bracket, and an opposite trawl face which comprises a bridle bracket. The trawl door comprises at least one regulation means for adjusting a hydrodynamic surface of the trawl door, said regulation means comprises at least one through opening or at least one cut out, a hatch displaceable in the length direction and a hatch actuator, where the hatch covers the through opening or the cut out when the hatch is in a closed position. The regulation means is positioned on the towing face of the leading plate.

The towing face is the side of the trawl door that faces a towing vessel during operation. The towing face is also known as a front side or an inner side of the trawl door. The trawl face is the side of the trawl door that faces a trawl net during operation. The trawl face is also known as a rear side or an outer side of the trawl door. The faces of the plates are named in the same manner. The front end or leading end of the trawl door is closer to the towing vessel during operation compared to the rear end or the trailing end of the trawl door. The relative position of the plates is disclosed in accordance with this. In the same manner each plate forms a leading edge and a trailing edge

The at least one through opening may be located at the trailing edge of the leading plate.

The at least one cut out may be located at the trailing edge of the leading plate.

The regulation means may be positioned at an upper leading plate. The regulation means may be positioned at a lower leading plate. The regulation means may be positioned at an intermediate leading plate.

In the following is described examples of preferred embodiments illustrated in the accompanying drawings, wherein:
- Fig. 1: shows a pelagic trawl door according to the invention, the trawl door is seen from a towing face, and the trawl door constitutes a port side door in a pair of trawl doors;
- Fig. 2: shows in the same scale as figure 1, the trawl door from the opposite side, the trawl face, and the trawl door constitutes a star-board door in a pair of trawl doors;
- Fig. 3: shows in a different scale in perspective a star-board trawl door with a number of through openings in a leading plate;
- Fig. 4: shows the same as figure 3 in a second embodiment with a cut out in the leading plate;
- Fig. 5A-B: show in a different scale a side view of the leading plate and a regulation means, A: open position, B: closed position;
- Fig. 6A-B: show in a different scale in a perspective view a portion of a leading plate from the trawl face and the regulation means, A: open position, B: closed position;
- Fig. 7A-B: show in a different scale in a perspective view a lower end portion of a port side trawl door from the trawl face, and a portion of the regulation means, A: open position, B: closed position; and
- Fig. 8A-B: show the same as figures 7A-B in the second embodiment, A: open position, B: closed position.

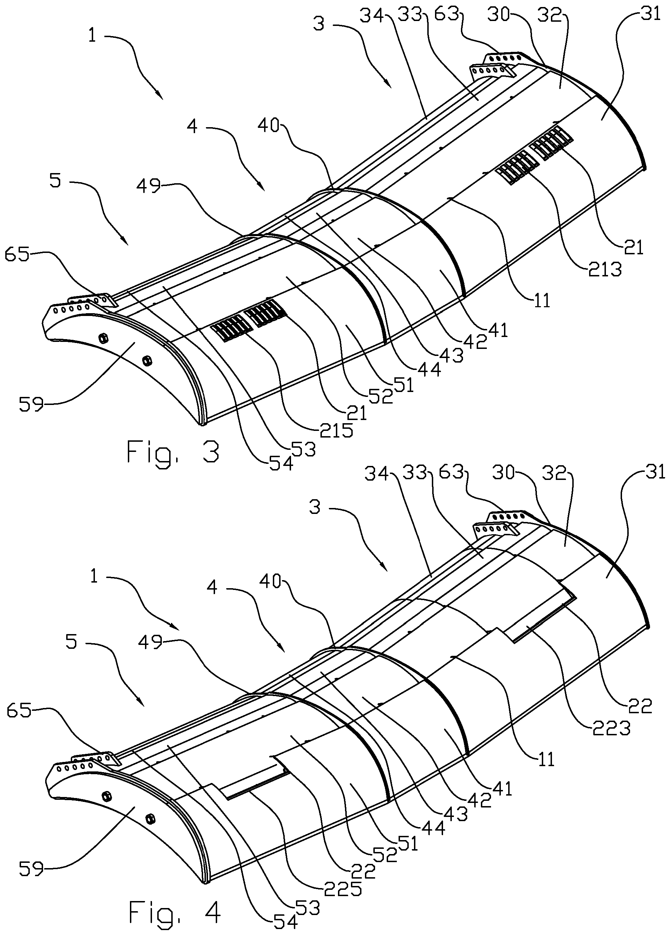

In the drawings, the reference numeral 1 indicates a pelagic trawl door provided with a regulation means 2 for adjusting a hydrodynamic area of the trawl door 1. The trawl door 1 has a height H that is greater than the length L. The trawl door 1 shown in the figures, forms in use an upper section 3, a middle section 4 and a lower section 5. The upper section 3 and the lower section 5 are shown angled relative to the middle section 4, as best seen in figures 3 and 4.

The upper section 3 comprises an upper frame 30. The lower section 5 comprises a lower frame 59. The middle section 4 extends between an upper intermediate frame 40 and a lower intermediate frame 49.

The trawl door 1 comprises in a known way several curved or cambered overlapping plates. The trawl door 1 is shown with four curved plates. More specifically the trawl door 1 is shown with four upper curved plates 31, 32, 33, and 34, respectively, which extend between, and are fastened to, the upper intermediate frame 40 and the upper frame 30. The trawl door 1 is further shown with four intermediate curved plates 41, 42, 43, and 44, respectively, which extend between, and are fastened to, the upper intermediate frame 40 and the lower intermediate frame 49. The trawl door 1 is further shown with four lower curved plates 51, 52, 53, and 54, respectively, which extend between, and are fastened to, the lower intermediate frame 49 and the lower frame 59. The curved plates 31-34, 41-44, 51-54 are arranged spaced apart such that water may flow between the upper plates 31-34, between the intermediate plates 41-44, and between the lower plates 51-54.

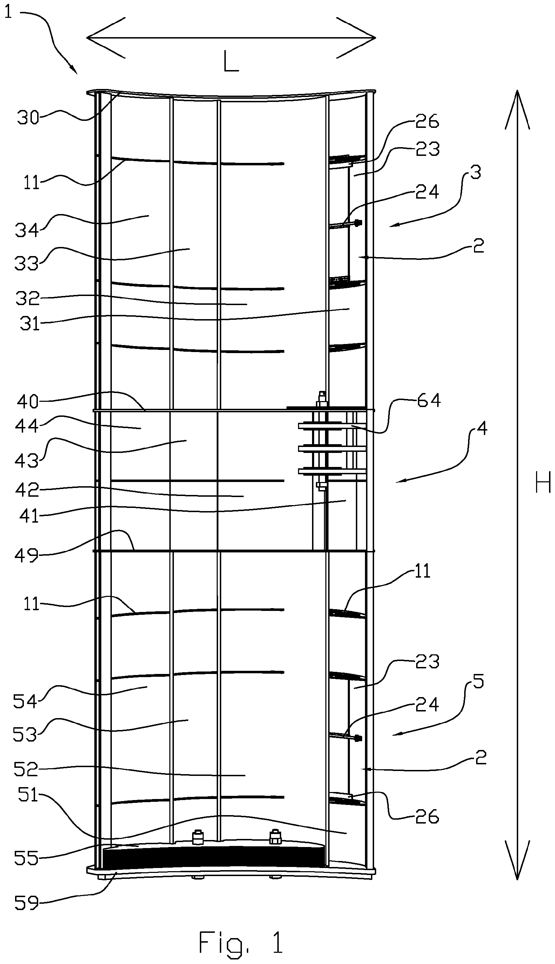

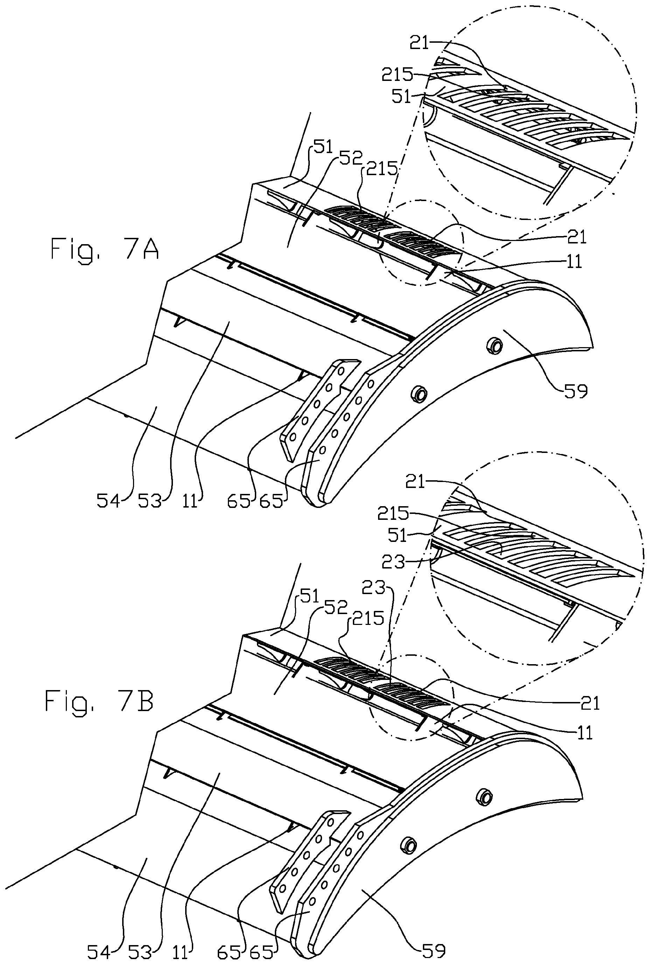

Several reinforcing ribs 11 are welded to the plates 31-34, 41-44, and 51-54 at a towing face of the plates 31-34, 41-44, and 51-54 as seen in figures 1, 7A-B, and 8A-B.

The trawl door 1 is shown provided with several weight plates 55 at the lower frame 59.

A towing bracket 64 for a towing cable (not shown) is positioned in the upper portion of the middle section 4 at the leading edge and at the towing face of the leading plate 41 as shown in figure 1. The towing bracket 64 is fastened to the upper intermediate frame 40. The towing cable connects the trawl door 1 to a fishing vessel (not shown).

An upper bridle bracket 63 is positioned at the upper frame 30 at the trailing edge at the trawl door's 1 trawl face. A lower bridle bracket 65 is positioned at the lower frame 59 at the trailing edge at the trawl door's 1 trawl face. Bridles (not shown) connect the trawl door 1 to a fishing trawl (not shown).

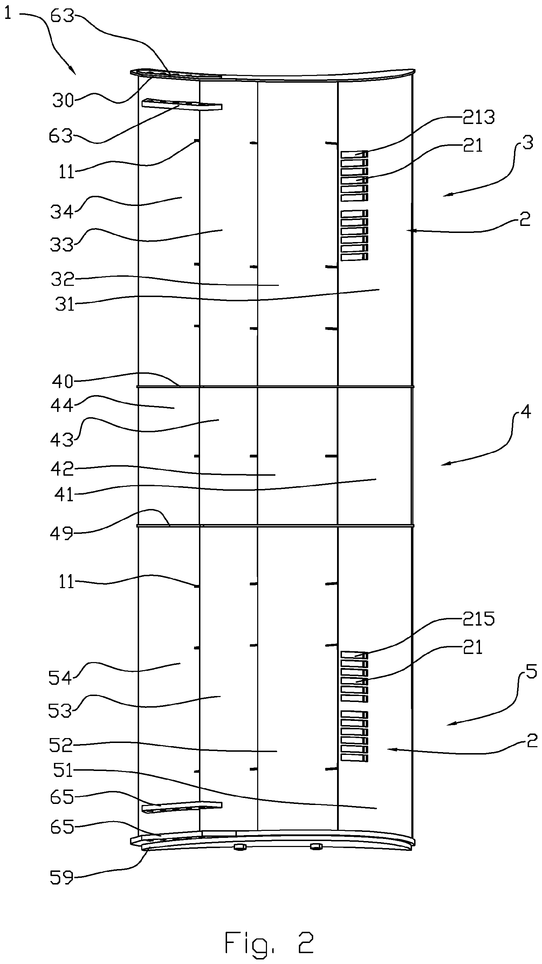

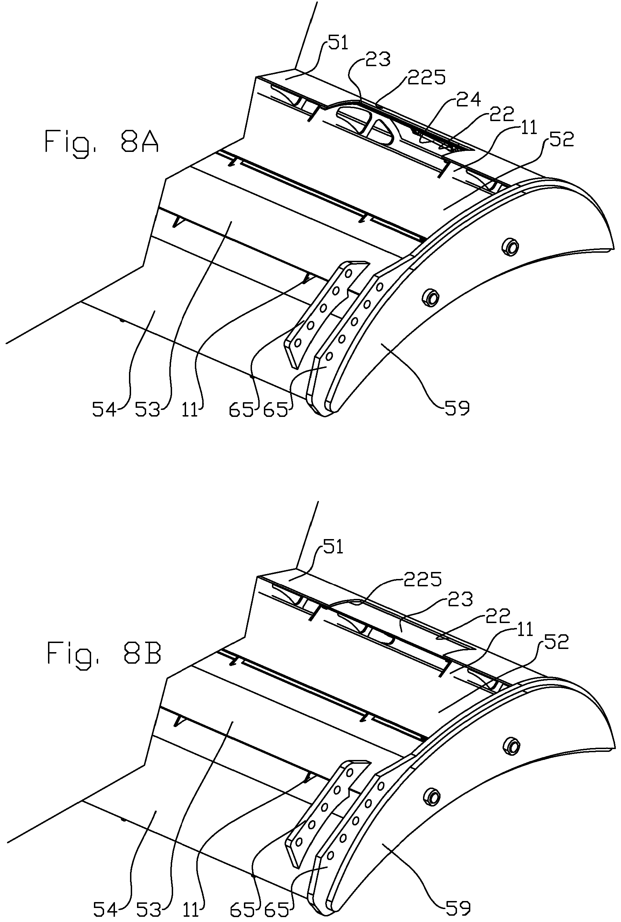

At least one of the leading plates 31, 41, 51 are in one embodiment provided with at least one through opening 21. The trawl door 1 is shown with several through openings 21, 213 in the leading plate 31 and several through openings 21, 215 in the leading plate 51, see figures 2, 3 and 7A, 7B. In an alternative embodiment at least one of the leading plates 31, 41, 51 are provided with at least one cut out 22. The cut out 22, 223 is shown positioned at the trailing edge of the leading plate 31 as shown in figures 4 and 8A, 8B. The cut out 22, 225 is shown positioned at the trailing edge of the leading plate 51.

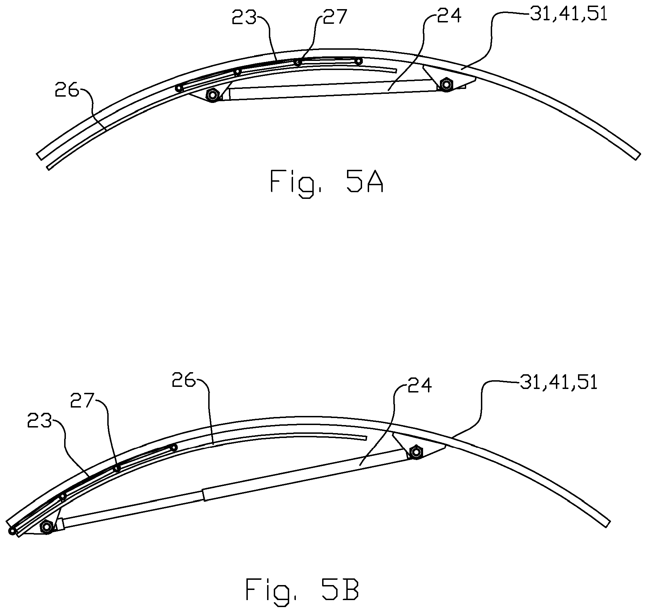

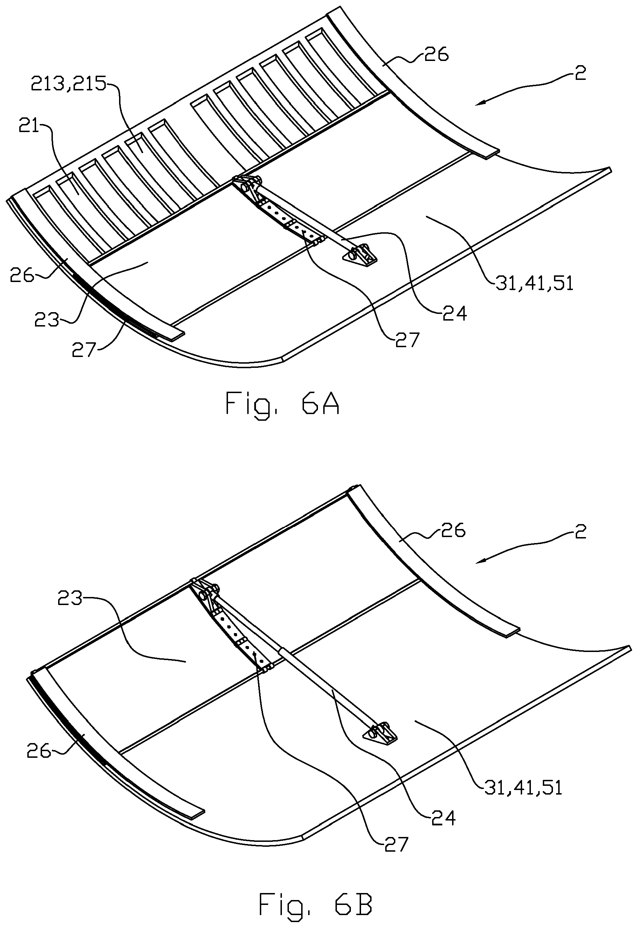

The regulation means 2 comprises the through opening 21 or the cut out 22. The regulation means 2 further comprises a displaceable hatch 23, and a hatch actuator 24, see figures 5A, 5B, 6A, 6B. The hatch actuator 24 displaces the hatch 23 between an open position and a closed position. The hatch actuator 24 is in a first end portion fastened to the leading plate 31, 41, 51, and in an opposite second end portion fastened to the hatch 23. In the closed position the hatch 23 covers the through opening 21 or the cut out 22. In the open position the hatch 23 is retracted towards the leading edge of the leading plate 31, 41, 51 such that water is free to flow through the through opening 21 or cut out 22. The hatch actuator 24 may be remotely operated and the hatch actuator 24 may position the hatch 23 in an optional position between fully closed and fully open. The hatch actuator 24 may be a hydraulic linear actuator. The hatch actuator 24 may be an electrically operated linear actuator.

The hatch 23 is displaced along guides 26. The guides 26 are positioned at the towing face of the leading plate 31, 41, 51 which is provided with through openings 21 or cut out 22. The guides 26 follows the curved profile of the leading plate 31, 41, 51. The guides 26 are shown one on each side of the through openings 21 or cut out 22.

The hatch 23 may be made of a flexible material. In an alternative embodiment the hatch 23 may comprise several plates that are articulated connected by one or more hinges 27, as seen in figure 6A, 6B. In both embodiments the hatch 23 follows the profile of the leading plate 31, 41, 51 as shown in figure 6B.

The through openings 21 or the cut out 22 and the hatch 23 cover a portion of the leading plate 31, 41, 51 in the height direction H. The through openings 21 or the cut out 22, and the hatch 23 may cover a portion of the leading plate 31, 41, 51 between two adjacent ribs 11.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements.

The mere fact that certain measures are recited in mutually different dependent claims does not indicate that a combination of these measures cannot be used to advantage.

## Claims

1. A trawl door (1) forming a height (H) and a length (L), the trawl door (1) comprising several curved and overlapping plates (31-34; 41-44; 51-54) including a leading plate (31; 41; 51) which extend in the height (H) direction, wherein the trawl door (1) forms a towing face comprising a towing bracket (64) and an opposite trawl face comprising a bridle bracket (63, 65), the trawl door (1) comprises at least one regulation means (2) for adjusting a hydrodynamic surface of the trawl door (1), said regulation means (2) comprises at least one through opening (21) or at least one cut out (22), a hatch (23) displaceable in the length (L) direction and a hatch actuator (24), where the hatch (23) covers the through opening (21) or the cut out (22) when the hatch (23) is in a closed position, **characterised in that** the regulation means (2) is positioned on the towing face of the leading plate (31; 41; 51).

2. Trawl door (1) according to claim 1, wherein the at least one through opening (21) is located at the trailing edge of the leading plate (31; 41; 51).

3. Trawl door (1) according to claim 1, wherein the at least one cut out (22) is located at the trailing edge of the leading plate (31; 41; 51).

4. Trawl door (1) according to any of the preceding claims, wherein the regulation means (2) is positioned at an upper leading plate (31).

5. Trawl door (1) according to any of claims 1 - 3, wherein the regulation means (2) is positioned at a lower leading plate (51).

6. Trawl door (1) according to any of claims 1 - 3, wherein the regulation means (2) is positioned at an intermediate leading plate (41).

## Patentansprüche

1. Scherbrett (1), das eine Höhe (H) und eine Länge (L) bildet, wobei das Scherbrett (1) mehrere gebogene und sich überlappende Platten (31-34; 41-44; 51-54) umfasst, einschließlich einer vorderen Platte (31; 41; 51), die sich in Richtung der Höhe (H) erstreckt, wobei
das Scherbrett (1) eine Schleppseite umfassend einem Schleppbügel (64) und eine gegenüberliegende Schleppseite umfassend einem Hahnepotbügel (63, 65) bildet, das Scherbrett (1) mindestens ein Regulierungsmittel (2) zur Einstellung einer hydrodynamischen Oberfläche des Scherrbretts (1) umfasst,
das Regulierungsmittel (2) mindestens eine Durchgangsöffnung (21) oder mindestens einen Ausschnitt (22), eine in der Längs-, (L), -richtung verschiebbare Luke (23) und einen Lukenbetätiger (24) umfasst, wobei die Luke (23) die Durchgangsöffnung (21) oder den Ausschnitt (22) abdeckt, wenn sich die Luke (23) in einer geschlossenen Position befindet, **dadurch gekennzeichnet, dass** das Regulierungsmittel (2) auf der Schleppfläche der vorderen Platte (31; 41; 51) angeordnet ist.

2. Scherbrett (1) nach Anspruch 1, wobei sich die mindestens eine Durchgangsöffnung (21) an der hinteren Kante der vorderen Platte (31; 41; 51) befindet.

3. Scherbrett (1) nach Anspruch 1, wobei sich der mindestens eine Ausschnitt (22) an der hinteren Kante der vorderen Platte (31; 41; 51) befindet.

4. Scherbrett (1) nach einem der vorstehenden Ansprüche, wobei das Regulierungsmittel (2) an einer oberen vorderen Platte (31) angeordnet ist.

5. Scherbrett (1) nach einem der Ansprüche 1 - 3 wobei das Regulierungsmittel (2) an einer unteren vorderen Platte (51) angeordnet ist.

6. Scherbrett (1) nach einem der Ansprüche 1 - 3 wobei das Regulierungsmittel (2) an einer mittleren vorderen Platte (41) angeordnet ist.

## Revendications

1. Porte (1) de chalut formant une hauteur (H) et une longueur (L), la porte (1) de chalut comprenant plusieurs plaques incurvées et chevauchantes (31-34 ; 41-44 ; 51-54) incluant une plaque d'attaque (31 ; 41 ; 51) qui s'étendent dans la direction de hauteur (H), dans laquelle la porte (1) de chalut forme une face de remorquage comprenant un support de remorquage (64) et une face de chalut opposée comprenant un support (63, 65) de patte d'oie, la porte (1) de chalut comprend au moins un moyen de régulation (2) pour régler une surface hydrodynamique de la porte (1) de chalut, ledit moyen de régulation (2) comprend au moins une ouverture traversante (21) ou au moins une découpe (22), une trappe (23) pouvant être déplacée dans la direction de longueur (L) et un actionneur (24) de trappe, où la trappe (23) recouvre l'ouverture traversante (21) ou la découpe (22) lorsque la trappe (23) est dans une position fermée, **caractérisée en ce que** le moyen de régulation (2) est positionné sur la face de remorquage de la plaque d'attaque (31 ; 41 ; 51).

2. Porte (1) de chalut selon la revendication 1, dans laquelle la au moins une ouverture traversante (21) est située au niveau du bord de fuite de la plaque d'attaque (31 ; 41 ; 51).

3. Porte (1) de chalut selon la revendication 1, dans laquelle la au moins une découpe (22) est située au niveau du bord de fuite de la plaque d'attaque (31 ; 41 ; 51).

4. Porte (1) de chalut selon l'une quelconque des revendications précédentes, dans laquelle le moyen de régulation (2) est positionné au niveau d'une plaque d'attaque supérieure (31).

5. Porte (1) de chalut selon l'une quelconque des revendications 1 à 3, dans laquelle le moyen de régulation (2) est positionné au niveau d'une plaque d'attaque inférieure (51).

6. Porte (1) de chalut selon l'une quelconque des revendications 1 à 3, dans laquelle le moyen de régulation (2) est positionné au niveau d'une plaque d'attaque intermédiaire (41).
